# EUROPEAN PATENT APPLICATION

(11) **EP 0 827 981 A2**
(43) Date of publication of application: **11.03.1998**
(21) Application number: 97306790.3
(22) Date of filing: 02.09.1997
(51) Int. Cl.: C08L 69/00, C08L 63/02, C08K 5/524

(54) **Color stabilization of polycarbonate resins**

(30) Priority: 06.09.1996 US 709428
(71) Applicant: GENERAL ELECTRIC COMPANY, Schenectady, NY 12345 (US)
(72) Inventor: Goossens, Johannes Martinus D., 4624 HN Bergen op Zoom (NL); Hoeks, Theodorus Lambertus, 4613 AS Bergen op Zoom (NL); Jaatinen, Marja, 4617 AG Bergen op Zoom (NL); Kusters, Adrianus A.M., 4861 TA Chaam (NL)
(74) Representative: Szary, Anne Catherine, Dr.

(57) **Abstract**

An aromatic polycarbonate composition having improved color stability and improved plate-out resistance while maintaining good processing properties which composition consists of an aromatic polycarbonate and a stabilizer consisting of at least one organic phosphite and at least one particular epoxy wherein the epoxy has an on-set temperature of greater than 255°C and, preferably, at least 280°C. Also included herein is a process of preparing articles such as injection molded or extruded articles particularly transparent polycarbonate sheet having the improved properties set forth above.

## Description

### FIELD OF THE INVENTION

The present invention is directed to a thermoplastic aromatic polycarbonate composition having improved color stabilization and improved plate-out resistance, while maintaining good processibility properties. More specifically the composition of this invention comprises in combination an aromatic polycarbonate resin and a stabilizing system comprising at least one phosphite and an epoxy both in an amount sufficient to provide color stabilization, while maintaining good processability properties.

### BACKGROUND OF THE INVENTION

Clear transparent or even translucent aromatic polycarbonate upon exposure to an additional heat phase such as injection molding or extrusion and compounding thereof will induce yellowing of the polycarbonate resin. Even plate out may occur when certain additives to the composition migrate to the surface of the molded article or become deposited on the inside surface of the mold. This can also occur during extrusion of polycarbonate resin into sheets and/or film wherein the additives can migrate to the surface of the sheet or even plate-out onto the surface of rolls employed in extruding sheet or surfaces of a calibrator employed in profile extrusion. Materials plating out on the rolls is also referred to as "print-out". This print-out on the rolls employed in polycarbonate sheet production then acts like an engraving or printing roll which, in turn, causes surface imperfections in the surface of the extruded polycarbonate sheet. This is unacceptable for clear or translucent polycarbonate sheet. While yellowing is a critical imperfection in clear or translucent polycarbonate sheet, plate-out, on the other hand, can be detrimental to pigmented polycarbonate sheet since the plate-out or print- out can affect surface quality. A stabilizer, other than the stabilizer of this invention, may ultimately result in blocking of the extrusion line, particularly in profile extrusion.

The addition of additives to polycarbonate compositions to achieve certain properties or improved properties has been known to affect processibility of the polycarbonate resin during extrusion or injection molding. Therefore, the additive employed to achieve better or certain properties should not affect processibility. It has also been known to stablize polycarbonate resin against discoloration by employing phsophites and/or epoxies as stabilizing additives. However, these are broadly disclosed in such U.S. Patents as 4,381,358, 4,358,563 and 3,673,146. They do not disclose any criticality as to the particular additives as is required by the instant invention.

### SUMMARY OF THE INVENTION

This invention is directed to an improved color stabilizated aromatic polycarbonate composition wherein the polycarbonate is stabilized with a stabilizing system comprising at least one phosphite and a particular epoxy composition. This invention is also directed to a process for preparing an article made from a polycarbonate composition and having improved color stability and improved plate-out resistance, while maintaining good processing properties. The article may be either an injection molded article, an extruded sheet or film, an extruded profile, co-extrusion article or an extrusion blow molded article.

The phosphite employed herein may be either a single phosphite or a combination of two or more phosphites. The phosphites that may be employed herein are any of the organic phosphites having at least 6 carbons and preferably 6 to about 50 carbons. Preferred phosphites are tris (2,4 - di tertbutyl phosphite, tris (nonylphenyl) phosphite, triphenyl-phosphite, decyl diphenyl phosphite, didecyl phenyl phosphite, tridecyl phosphite, tris (1,4 di-tert-butylphenyl) phosphite, tris idoecyl phosphite, bis(2,4 di-tert-butylphenyl) pentacrythritol bisphosphite, distearoyl pentacrythrito bisphosphite, bis(2-tert-butyl-4-cumylphenyl) pentaerythritol bisphosphite, 2,2'-methylene bis(4,6-di-tert-butylphenyl) octylphosphite, bis(2,6-di-tert-butyl-4-methylphenyl) pentaerythritol bisphosphite, 2,4,6-tri-tert-butylphenyl 2-butyl 2-ethyl 1,3-propane diol phosphite, bis(2,2-dimethyl-1,3-propanediol) tetra[2,2,-bis(4-hydroxy 3,5-di-tert-butylphenyl) propane bisphosphite or mixtures thereof. The preferred phosphite employed in the practice of this invention is a mixture of phosphites and more particularly a mixture of tridecylphosphite, didecylphenyl phosphite, decyl diphenyl phosphite and triphenyl phosphite.

The epoxy composition employed in the practice of this invention can be any epoxy composition having an on-set temperature greater than 255°C as determined by thermal gravometric analyzer (TGA) in a nitrogen atmosphere. Preferably the epoxy compositions employed in the practice of these inventions are glycidyl ethers based on dihydricphenols such as 1,1-bis (4-hydroxyphenyl) methane (BPF) and 2,2,-bis(4-hydroxyphenyl) propane (BPA) and mixtures thereof. Both liquid and solid ethers can be applied. Glycidyl ethers of polyfunctional phenol/cresol novolacs Aliphatic and cycloaliphatic/ aromatic epoxy resins, like, epoxidized sojabean oil, bis(2,3-epoxypropyl) ester of terephthalic acid, tris(2,3-epoxypropyl) ester of 1,2,4 benzene-tricarboxylic acid, 3,4 epoxycyclohexylmethyl-3,4 epoxycyclohexylcarboxylate and the like are suitable herein. Epoxides containing heterocyclic groups like triglycidyl isocyanurate are applicable, as well as mixtures of epoxies. The critical feature of this instant invention is that the epoxy must have an onset temperature of greater than 255°C. If the epoxy has an on-set temperature of 255°C or less, severe plate-out occurs as shown in the Examples, Table 4.

The epoxy employed herein can be represented by the formula 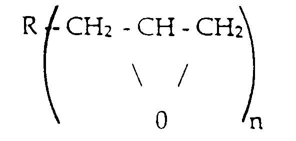 having an on-set temperature of greater than 255°C and, preferably, at least 280°C and, more particularly, at least 300°C. In the above formula R is independently selected from the group consisting of alkyl, aryl, aryalkyl, cycloalkyl, heterocyclics, substituted derivatives thereof and the like having at least 2 carbons and, preferably, 2 to 50 carbons and n is an integer of from 1-5. The preferred epoxy is diglycidyl ester of hexahydrophthalic and having an on-set temperature of about 286°C (Ciba Geigy's Araldite PY284).

The amount of stabilizer employed herein should be that amount sufficient to stabilize the aromatic polycarbonate resin against discoloration and improved plate out resistance, while maintaining good processibility properties during extrusion or molding. Preferably, the stabilization system comprises about 0.03 weight % to about 0.30 weight % based on the weight of the polycarbonate resin. More particularly the range of stabilizer system is about 0.04 to about 0.10 weight %.

While a single phosphite in combination with the epoxy is applicable in this invention, the preferred phosphite is a combination of phosphites. When employing two phosphites, the phosphite system preferably comprises about 10-90 weight % of one phosphite and about 90-10 weight % of the other phosphite based on the total weight of the phosphite composition employed. In the event more than two phosphites are employed, it is preferable that at least two of the phosphites should each comprise at least 10 weight % of the total phosphite employed with the balance of phosphites being the other phosphite or phosphites. The actual combination of phosphites, when employing more than two phosphites may actually be any combination that is sufficient, when combined with the particular epoxy of this invention, to stabilize the aromatic polycarbonate.

The stabilizer system of this invention i.e. the ratio of phosphite to epoxy should be about 5:1 to 1:5. Preferably, the ratio is about 3:1 to 1:3.

The aromatic polycarbonate resin employed herein may be any of the known aromatic polycarbonates, co-polycarbonates, or blends of polycarbonates with other polymers or co-polycarbonates. The aromatic polycarbonate employed in the practice of this invention may be prepared by reacting a dihydric phenol with a carbonate precursor in the presence of an acid acceptor and generally a molecular weight regulator. Any dihydric phenol may be employed in preparing the polycarbonate resin disclosed herein. Preferably, they are mononuclear or polynuclear aromatic compounds containing as functional groups two hydroxyl radicals, each of which is attached directly to a carbon atom of an aromatic nucleus. Examples of some of the dihydric phenols which can be employed in the practice of this invention are bisphenols such as 1,1-bis(4-hydroxyphenyl) methane, 2,2-bis(4-hydroxyphenyl) propane, 4,4-bis(4-hydroxyphenyl) heptane, etc.; dihydric phenol ethers such as bis(4-hydroxyphenyl ether, bis(3,5-dichloro-4-hydroxyphenyl)ether, etc.; dihydroxy diphenyls such as p,p'-dihydroxydiphenyl, 3,3'-dichloro-4,4'-dihydroxy-diphenyl, etc.; dihydroxvaryl sulfones such as bis(4-hydroxyphenyl) sulfone, bis(3,5-dimethyl-4-hydroxyphenyl) sulfone, bis (3-methyl-5-ethyl-4-hydroxyphenyl) sulfone, etc.; dihydroxy benzenes, resorcinol, hydroquinone; halo- and alkyl-substituted dihydroxy benzenes such as 1,4-dihydroxy-2-chlorobenzene, 1,4-dihydroxy-2,3-dichlorobenzene, 1,4-dihydroxy-2-methylbenzene, etc.; and dihydroxy diphenyl sulfoxides such as bis(4-hydroxyphenyl) sulfoxide, bis(3,5-dibromo4-hydroxyphenyl) sulfoxide, etc.

The carbonate precursor employed in the practice of this invention can be either carbonyl halide or a haloformate. The carbonyl halides which can be employed herein are carbonyl bromide, carbonyl chloride, carbonylfluoride, etc.; or mixtures thereof. The haloformates suitable for use herein include bishaloformates of dihydric phenols (bischloroformates of hydroquinone, etc.) or glycols (bishaloformates of ethylene glycol, neopentyl glycol, polyethylene glycol, etc). While other carbonate precursors will occur to those skilled in the art, carbonyl chloride, also known as phosgene, is preferred.

The aromatic polycarbonate employed in the practice of this invention is prepared by reating a dihydric phenol with a carbonate precursor in the presence of an acid acceptor and generally a molecular weight regulator. Any dihydric phenol may be employed in preparing the polycarbonate resin disclosed herein. Preferably, they are mononuclear or polynuclear aromatic compounds containing as functional groups two hydroxyl radicals, each of which is attached directly to a carbon atom of an aromatic nucleus. Examples of some of the dihydric phenols which can be employed in the practice of this invention are bisphenols such as 1,1-bis(4-hydroxyphenyl) methane, 2,2-bis(4 -hydroxyphenyl) propane, 4,4-bis (4-hydroxyphenyl) heptane, etc.; dihydric phenol ethers such as bis(4-hydroxyphenyl ether, bis(3,5-dichloro-4-hydroxyphenyl) ether etc.; dihydric diphenyls such as p,p'-dihydroxydiphenyl, 3,3'-dichloro-4,4'-dihydroxydiphenyl, etc.; dihydroxyaryl sulfones such as bis(4-hydroxyphenyl) sulfone, bis(3,5-dimethyl-4-hydroxyphenyl) sulfone, bis(3-methyl-5-ethyl-4-hydroxyphenyl) sulfone, etc.; dihydroxy benzenes, resorcinol, hydroquinone; halo- and alkyl-substituted dihydroxy benzenes such as 1,4-dihydroxy-2-chlorobenzene, 1,4-dihydroxy-2,3-dichlorobenzene, 1,4-dihydroxy-2-methylbenzene, etc.; and dihydroxy diphenyl sulfoxides such as bis(4-hydroxyphenyl) sulfoxide, bis(3,5-dibromo-4-hydroxyphenyl) sulfoxide, etc.

The carbonate precursor employed in the practice of this invention can be either carbonyl halide or a haloformate. The carbonyl halides which can be employed herein are carbonyl bromide, carbonyl chloride, carbonyl fluoride, etc.; or mixtures thereof. The haloformates suitable for use herein include bishaloformates of dihydric phenols (bischloroformates of hydroquinone, etc.) or glycols (bishaloformates of ethylene glycol, neopentyl glycol, polyethylene glycol, etc.). While other carbonate precursors will occur to those skilled in the art, carbonyl chloride, also known as phosgene is preferred.

The reaction disclosed above is preferably known as an interfacial process or reaction between the dihydric compound and a carbonyl chloride such as phosgene. Another process for preparing the aromatic polycarbonate of this invention is the transesterification process which involves the transesterification of an aromatic dihydroxy compound and a diester carbonate. This process is known as the melt process. In the practice of this invention, the process of producing the aromatic polycarbonate is not critical. The critical feature of this invention is the composition of the aromatic polycarbonate and the stabilizer system. As used herein, aromatic polycarbonate shall mean and include any of the aromatic polycarbonates and combinations thereof as set forth above.

As stated previously, the stabilizer system disclosed herein stabilizes the polvcarbonate against yellowing during heat processing of the composition, as well as improving plate-out resistance without significantly affecting the processability properties of the composition either in extrusion or injection molding of the composition. Processability with respect to extrusion can be that extrusion during preparation of the composition for subsequent molding or extrusion or co-extrusion into sheet or film, or extrusion blow molding. Such processes are well known to those skilled in the art and are disclosed in numerous articles and patents. Preferably, the composition is first compounded, generally, in an extruder and extruded into strands which are, generally, quenched, pelletized, dried and processed under further heat and pressure into the finished article. The finished article may be injection molded, profile extruded, sheet or film extruded, coextruded or extruded blow molded into hollow shapes such as plastic bottles either single or multi-layer bottles. The key feature of the invention is that the articles have improved color stability and improved plate-out resistance, while maintaining good process properties.

### DETAILED DESCRIPTON OF THE EXAMPLES OF THIS INVENTION

This invention can be further described by means of the following Examples, it being understood, however, that this invention shall in no way, be restricted by these Examples. In the Examples where amounts are in terms of percent, they are percent by weight.

The epoxies employed in the Examples are as follows:

| | |
|---|---|
| PY284 - (Araldite PY284 Ciba Geigy) | Diglycidyl ester of hexahydrophthalic acid |
| | On-set temperature: 286°C |
| GT7071 - | Bisphenol A epoxy resin based on epichlorohydrin |
| (Araldite GT7071 Ciba Geigy) | On-set temperature: 428°C |
| PT910 - (Araldite PT910 by Coba Geigy) | Mixture of Bis(2,3-epoxypropyl) terephthalate and tris(2,3-epoxypropyl) 1,2,4 benzene-tricarboxylate |
| | On-set temperature: 307°C |
| URL 4221 - (Union Caribe) | 3,4 epoxycyclohexyl methyl 3',4'- epoxycyclohexane carboxylate |
| | On-set temperature: 255°C |
| 6610 - (Araldite GT6610 by Ciba Geigy) | Bisphenol-A epoxy resin |
| | On-set temperature: 442°C |
| DER 667 - (Dow Chemical Co.) | Bisphenol-A epoxy resin |
| | On-set temperature: 442°C |
| ECN 1273 - (Araldite ECN1273 by Ciba Geigy) | Epoxy cresol novolac resin |
| | On-set temperature: 387°C |
| PY 307-1 - (Araldite PY307-1 by Ciba Geigy) | Epoxy phenol novolac resin |
| | On-set temperature: 351°C |

In Table 1, the reference formulation are the comparative formulations and are rated as zero (0) with the other numbers indicating a better resistance to discoloration, processability and plate-out in comparison to the reference formulation. A negative number indicates a worse condition than the reference sample.

### Example 1

Polycarbonate powder, having an intrinsic viscosity of about 0.48 dl/g as measured at 20° C in methylene chloride and additives as set forth in the following Table 1 were compounded and extruded into strands at a melt temperature of about 310°C. Each formulations contained essentially the same quantity of polycarbonate and usual weight % of UV absorber and mold release agent. The polycarbonate content varied only with respect to the quantity of stabilizer employed in each formulation. The extruded strands were quickly quenched in water and pelletized. The pellets were then dried at about 120°C for about 2 hours. The pellets were then injection molded into clear transparent plaques about 10 cm square by about 2.5 mm thick. The color of polycarbonate plaques were analyzed by placing the plaques on a white paper background and comparing each plaque against a comparative plaque molded from a polycarbonate composition containing only a single phosphite, the reference formulation. The results are set forth in Table 1.

**TABLE 1**

| Formulation | | | | Color |
|---|---|---|---|---|
| | Phosphite | | | |
| | A | B | EPOXY | |
| 1. | 0.05 | - | - | 0 |
| (reference) | | | | |
| 2. | 0.03 | 0.0265 | 0.0135 (URL 4221) | 1 |
| 3. | 0.03 | 0.0265 | 0.0135 (DER 667) | 1 |
| 4. | 0.03 | 0.0265 | 0.0135 (PT910) | 3 |
| 5. | 0.03 | 0.0265 | 0.0135 (ECN 1273) | 2 |
| 6. | 0.03 | 0.0265 | 0.0135 (GT7071) | 3 |
| 7. | 0.03 | 0.0265 | 0.0135 (GT6610) | 2 |
| 8. | 0.03 | 0.0265 | 0.0135 (PY284) | 4 |
| 9. | 0.03 | 0.0265 | 0.0135 (PY307-1) | 2 |
| A - Tris (2,4 di tertiary butylphenyl phosphite) B - Diphenyl isodecyl phosphite | | | | |

The above results show the color stability of the composition of this invention compared to the comparative reference formulation without epoxy.

### Example 2

Example 1 was repeated except that the formulations set forth in Table 2 below were passed through the extruder twice before they were injection molded into plaques in accordance with the conditions employed in Example 1. The plaques were visually examined for color stability using the same procedure as in Example 1. The results obtained are as reported in Table 2 using the same rating as in Example 1.

**TABLE 2**

| Formulation | | | | | Color |
|---|---|---|---|---|---|
| | Phosphite | | | | |
| | A | B | C | Epoxy | |
| 10. | 0.05% | - | - | - | 0 |
| (reference) | | | | | |
| 11. | 0.03 | 0.0265% | - | 0.004% (PY284) | 1 |
| 12. | 0.03 | 0.0265 | - | 0.0135 (PY284) | 3 |
| 13. | 0.03 | 0.0265 | - | 0.0135 (PT910) | 2 |
| 14. | 0.03 | 0.0265 | - | 0.0135 (GT7071) | 2 |
| 15. | 0.03 | - | 0.0265% | 0.004 (PY284) | 2 |
| 16. | 0.03 | - | 0.0265 | 0.0135 (PY284) | 2 |
| 17. | 0.03 | - | 0.0265 | 0.0135 (PT910) | 2 |
| 18. | 0.03 | - | - | 0.01 (PY284) | 2 |
| A&B are the same phosphites set forth in Table 1. C is Trisnonylphenyl phosphite. | | | | | |

Again the results show that the stabilize system of this invention has better color stability than the standard reference sample without epoxy. This also demonstrates color stability in processing even after two passes of compounding through the extruder.

### Example 3

Example 1 was repeated except that the formulations as set forth in Table 3 below were single extruded, pelletized, dried and injection molded at a temperature of about 340°C, which was about 30°C higher than standard molding conditions. In addition, the residence time of the melt in the injection molding apparatus during injection molding of the plaques was increased from 3 minutes to 12 minutes. This demonstrates the effectiveness of the stabilizer package under abusive molding.

**TABLE 3**

| Formulation | | | | | Color |
|---|---|---|---|---|---|
| | Phosphite | | | | |
| | A | B | C | Epoxy | |
| 19. | 0.05% | - | - | - | 0 |
| (reference) | | | | | |
| 20. | 0.03 | 0.0265% | - | 0.004 (PY284) | 3 |
| 21. | 0.03 | 0.0265 | - | 0.013 (PY284) | 3 |
| 22. | 0.03 | 0.0265 | - | 0.013 (PT910) | 3 |
| 23. | 0.03 | 0.0265 | - | 0.013 (GT7071) | 3 |
| 24. | 0.03 | - | 0.0265% | 0.004 (PY284) | 3 |
| 25. | 0.03 | - | 0.0265 | 0.01 (PY284) | 2 |
| 26. | 0.03 | - | 0.0265 | 0.0135 (PT910) | 2 |
| 27. | 0.03 | - | - | 0.01 (PY284) | 1 |
| A - Tris (2,4, di-tertiary butylphenyl phosphite) B - (see Table 1) C - (see Table 2) | | | | | |

### Example 4

Example 1 was repeated except that the formulations set forth in Table 4 were employed in this Example. The formulations were also evaluated for processability and plate-out. Processability was determined by profile extrusion. The ease with which the melt from the extruder can be transferred into the calibrator for extruding the profile was visually observed. Plate-out was determined by visual inspection of the calibrator after 25 minutes of extrusion. The results obtained are shown in Table 4.

**TABLE 4**

| Formulation | | | | Color Processability Plate-Out | | |
|---|---|---|---|---|---|---|
| | Phosphite | | | | | |
| | A | B | Epoxy | | | |
| 28. | 0.05% | - | - | 0 | 0 | Minor Plate-Out |
| (reference) | | | | | | |
| 29. | 0.05 | 0.007% | 0.005% (URL4221) | 2 | -1 | Severe* Plate-Out |
| 30. | 0.03 | | 0.01 (PY284) | 1 | 0 | Minor** Plate-Out |
| 31. | 0.03 | 0.01 | 0.01 (PY284) | 1 | 1 | Minor** Plate-Out |
| 32. | 0.03 | 0.01 | 0.015 (TP910) | 1 | 1 | No Plate-Out |
| 33. | 0.03 | 0.01 | 0.015 (GT7071) | 1 | 1 | No Plate-Out |

| | | | | | | |
|---|---|---|---|---|---|---|
| A and B are the same as reported in Table 1. * Severe plate-out occurred immediately upon profile extrusion - not acceptable | | | | | | |
| ** Minor plate-out but only occurred at the end of the time period. The extruded profile was still acceptable up to that time. | | | | | | |

As can be seen from the Examples, the stabilizer system of this invention has better color stability and better plate-out resistance when employing an epoxy having an on-set temperature greater than the 255°C. In the above Examples 28-33, the on-set temperature is greater than 280°C. In Example 29 when employing an epoxy having an on-set temperature of 255°C, the color stability was better than the reference sample, but plate-out was immediately severe.

## Claims

1. An aromatic polycarbonate composition having improved color stability and improved plate-out resistance, while maintaining good processing properties, comprising an aromatic polycarbonate and a stabilizing amount of a stabilizer comprising in combination at least one organic phosphite and at least one epoxy having an on-set temperature of greater than 255°C.

2. The composition of claim 1 wherein the stabilizer comprises at least two chemically different organic phosphites.

3. The composition of claim 1 wherein the epoxy comprises a mixture of at least two epoxies each having an on-set temperature greater than 255°C.

4. The composition of claim 1 wherein the stabilizer comprises about 0.03 to about 0.30 weight % based on the weight of the polycarbonate.

5. The stabilizer composition of claim 4 wherein the stabilizer compositions comprises about 0.04 to about 0.10 weight %.

6. The composition of claim 1 wherein the epoxy has an on-set temperature of at least 280°C.

7. The composition of claim 1 wherein the epoxy has an on-set temperature of at least 300°C.

8. An aromatic polycarbonate composition having improved color stability and improved plate-out resistance, while maintaining good processing properties consisting essentially of an aromatic polycarbonate and a stabilizing amount of a stabilizer consisting essentially of at least one organic phosphite and at least one epoxy having an on-set temperature of greater than 255°C.

9. A process of preparing a thermoplastic article from an aromatic polycarbonate composition by compounding the aromatic polycarbonate composition and processing the compounded composition under heat and pressure to form the final article, wherein the final article has improved color stability and improved plate-out resistance while maintaining good processing properties and wherein the composition comprises an aromatic polycarbonate and a stabilizer comprising in combination at least one organic phosphite and at least one epoxy having an on-set temperature of greater than 255°C.

10. A transparent thermoplastic aromatic polycarbonate sheet having improved color stability and improved plate-out resistance comprising in combination an aromatic polycarbonate and a stabilizer comprising at least one organic phosphite and at least one epoxy having an on-set temperature of greater than 255°C.
